**Europäisches Patentamt**

(19) **European Patent Office**

**Office européen des brevets**

(11) Publication number: **0 025 253**
**B1**

(12) **EUROPEAN PATENT SPECIFICATION**

(45) Date of publication of patent specification: **01.02.84**

(51) Int. Cl.³: **G 11 B 7/24, B 41 M 5/24**

(21) Application number: **80200833.4**

(22) Date of filing: **05.09.80**

(54) **Optical recording disk.**

(30) Priority: **10.09.79 NL 7906728**

(43) Date of publication of application:
**18.03.81 Bulletin 81/11**

(45) Publication of the grant of the patent:
**01.02.84 Bulletin 84/5**

(84) Designated Contracting States:
**AT BE CH DE FR GB IT LI NL SE**

(56) References cited:
**EP - A - 0 013 453**
**EP - A - 0 017 289**
**DE - A - 2 203 861**
**DE - A - 2 439 848**
**DE - A - 2 632 122**
**DE - A - 2 826 122**
**US - A - 4 032 691**

**PATENT ABSTRACTS OF JAPAN, vol. 2 no. 23,**
**15-02-1978, page 11671 E 77**
**LASER + ELEKTRO-OPTIK, vol. 11, no. 1, March**
**1979 Stuttgart DE "Diode Laser Recorder gives**
**10(10) User bit per 12 "Disk", pages 14-17**

(73) Proprietor: **N.V. Philips' Gloeilampenfabrieken**
**Groenewoudseweg 1**
**NL-5621 BA Eindhoven (NL)**

(72) Inventor: **Kivits, Petrus Johannes**
**c/o Int. Octrooibureau B.V. Prof. Holstlaan 6**
**NL-5656 AA Eindhoven (NL)**
Inventor: **De Bont, Marinus Reinerus Joannes**
**c/o Int. Octrooibureau B.V. Prof. Holstlaan 6**
**NL-5656 AA Eindhoven (NL)**
Inventor: **De Poorter, Adriaan Wilhelmus**
**c/p Int. Octrooibureau B.V. Prof. Holstlaan 6**
**NL-5656 AA Eindhoven (NL)**

(74) Representative: **Weening, Cornelis et al,**
**INTERNATIONAAL OCTROOIBUREAU B.V. Prof.**
**Holstlaan 6**
**NL-5656 AA Eindhoven (NL)**

Optical recording disk

The invention relates to an optical recording disk in which information can be written and read optically, comprising a disk-shaped substrate which has an amorphous recording layer on at least one side which, upon exposure to high energy light modulated according to the information, melts in the exposed places and forms holes (information bits).

Such a disk is disclosed *inter alia* in Netherlands Patent Application 7607997. The disk described in said Application comprises a substrate plate on which a recording layer is present comprising at least 30 at.% Se and/or Te. Upon exposure to modulated laser light, liquid areas are formed in which the liquid in such an area then retracts while forming a hole (information bit) which is surrounded by an upright edge of material originating from the liquid area.

It is one object of the present invention to increase the sensitivity of recording of information so that amorphous recording materials which previously were insensitive and in which an information bit can be written only with a comparatively large amount of laser light energy can now be used readily. Amorphous recording materials in themselves are particularly interesting because in comparison with crystalline recording materials they have a considerably better stability and in particular a significantly more favourable signal-to-noise ratio.

A more particular object of the invention is to provide a recording disk having an amorphous recording layer in which information bits can be formed with a small amount of laser light energy.

Another object of the present invention is to provide an optical recording disk with amorphous recording layer in which very small holes can be formed while using modulated laser light so that a considerably increased information density is achieved.

A further object of the invention is to provide an optical information disk with an amorphous recording layer in which small holes of different diameters can be formed with a varying amount of laser light energy so that an analogue recording of information becomes possible, which also results in a much larger information density.

According to the invention, the above objects are achieved in the opening paragraph which is characterized in that the substrate surface situated on the side of the recording layer, at least in those places where upon exposure holes are to be formed in the overlying recording layer, comprises surface discontinuities which have diametrical dimensions from 30 to 300 nm and a level difference with the substrate surface from 8 to 80 nm, the recording layer having a maximum thickness of approximately 50 nm.

The term "diametrical dimensions" is to be understood to include also the width dimensions of, for example, scratches provided in the substrate surface. It concerns the smallest horizontal dimension of a surface discontinuity.

The thickness of the recording layer is preferably smaller than 40 nm and in particular 20—30 nm.

In the United States Patent 4.032,691 a recording material is disclosed comprising a highly thermally insulating layer between a support and a recording layer. The insulating layer has a porous structure comprising pores throughout the entire layer, said pores having dimensions as mentioned in the Examples, of for example 0,6 or 2 $\mu$m. The recording layer overlying the porous insulating layer, is not supported by the insulating layer at the site of the pores and therefor partly is a freehanging flat layer, contrary to the construction according to the present invention in which the recording layer is fully supported by the substrate. In the recording material of the said U.S. Patent, holes are formed having a spot size of 18 $\mu$ (column 9, line 33). The known material is fully unsuitable for the production of holes (bits) of about 1 $\mu$m as in the present application. If such holes could be introduced in the material known from the above U.S. Patent, the shape of the holes would be quite irregular so that information thus recorded could not be displayed.

The present invention is based on the recognition gained by the Applicants that comparatively much laser light energy is required to initiate in the amorphous recording layer a liquid area obtained by laser light and thus to create a hole. This comparatively high energy barrier cannot exclusively be overcome by thermal activation of the liquid area.

Applicants have gained the further recognition that by using a substrate plate having surface discontinuities of the above-mentioned specific dimensions in combination with an amorphous recording layer of the above-mentioned small thickness, the hole initiation can be considerably stimulated.

It has been found experimentally that when using the known recording disks, the liquid areas produced in the amorphous recording layer by means of laser light must attain comparatively large diametrical dimensions before the liquid of said area retracts to form a hole having a ridge. In the recording disk according to the invention, a hole is already formed in the liquid area of much smaller diametrical dimensions in the recording layer upon exposure to laser light. This means that less laser light energy will suffice and a smaller hole will be obtained. The strong effect which the surface discontinuity has on the hole initiation in which, as already said, the liquid areas in the recording layer withdraw to form holes of a much smaller diameter and hence much sooner, can hardly be explained, even afterwards. It is believed that the phenomenon discovered can partly be explained from an increased internal liquid pressure in the liquid area caused by laser light. At the area of the discontinuity the surface shows a ridge which, compared with a flat surface, has a reduced radius of curvature. The inwardly directed liquid pressure is inversely proportional to the radius of curvature and is significantly increased at the area of the discontinuity.

By variation of the quantity of laser light energy used in the formation of a hole, holes of different diameters can be obtained in the amorphous recording layer. For example, it has been found experimentally that in an amorphous recording layer of a tellurium alloy, for example, a Ge/Te alloy, which has a thickness from 30—40 nm, holes having diameters of approximately 0.3 $\mu$m can be provided by means of laser light. The amount of laser light energy per hole (information bit) then is roughly 0.4 nJ and originates, for example, from a laser having an emission wavelength of 647 nm, a power of 5 mW on the recording layer and a pulse time of 75 ns. When the same laser is used but with a pulse time of 100 ns, liquid areas are obtained in the recording layer of larger diametrical dimensions which result in a hole having a diameter of approximately 1.0 $\mu$m. In accordance with the amount of laser light energy used, holes of a variety of diametrical dimensions can be obtained of which also the largest still have a small diameter in the range to, for example 1.5 $\mu$m. Consequently, in addition to binary information recording the invention also provides the possibility of an analogue information recording, for example, a ternary recording (large hole, small hole, no hole) which has a significantly higher information density. For example, 8 bits are necessary for the binary recording of 200 characters ($2^7 < 200 < 2^8$) but only 5 bits are necessary for ternary recording ($3^4 < 200 < 3^5$).

The thin recording layer follows the contours of the surface discontinuities present in the underlying substrate surface. The surface of the recording layer remote from the substrate thus is not flat but in fact shows the same pattern of discontinuities as the substrate surface. The surface discontinuities of the recording layer both on the substrate side and the opposite side, have such small dimensions that the reflection power of the recording layer is not influenced or is not noteworthily influenced. Therefore, upon reading, a very good contrast is obtained between the information bits and the background. In this connection it is to be noted that the disk is read by means of weak laser light, that is to say low-energy laser light, preferably on the basis of reflection differences between information bits and background. The disk may alternatively be read in transmission.

In a favourable practical embodiment of the disk in accordance with the invention a substrate of glass or synthetic resin is used whose surface adjoining the recording layer has been roughened or scratched chemically or mechanically, or of which the surface adjoining the recording layer is a copy of the surface of a matrix comprising the surface discontinuity.

The substrate itself is solid in that sense that no open pores are present so as to avoid that upon exposure of the recording layer the initially formed liquid area diffuses away in the pore structure at least partly so that *inter alia* a loss of contrast occurs.

The chemical roughening can be realised by treating the substrate surface with an etchant. As an example the roughening of a substrate manufactured from polymethylmethacrylate may be mentioned in which the substrate surface is treated for 5 to 10 seconds with a suitable etchant, in particular perchloric acid.

The mechanical roughening can be carried out according to known roughening methods.

To be preferred is a substrate the surface of which is a copy of a matrix surface comprising the discontinuity. The manufacturing process of the recording disc is considerably simplified by this because it is not necessary for each substrate disc to be roughened individually. Quite a lot of suitable substrate discs can be manufactured according to usual techniques by means of a matrix which comprises in its surface a negative of the discontinuity desired in the substrate surface. A suitable technique is, for example, a compression technique in which a quantity of a plastic synthetic resin, for example PVC, placed centrally on a lower matrix, is impressed on a substrate disc at elevated temperature and pressure by means of a die having the desired discontinuity. Instead of the die, the lower matrix may be provided with the surface discontinuity. Alternatively, both matrices may have a surface discontinuity. Another technique is an injection moulding technique, in which a liquid composition of, for particular polymethylmethacrylate, is compressed in a mould, the moulding cavity of the mould having one or two matrices comprising the surface discontinuity.

The matrix is usually manufactured from metal, for example, nickel, and can be provided with the desired surface discontinuity, as already said chemically or mechanically. It is also possible to take the desired surface roughness into account during the manufacture of the matrix in which a master plate, which is a glass plate having a photolacquer in the desired configuration, is first covered in an electroless manner and is then electroplated with metal, after which the grown metal peel is removed from the master plate. In this manner it may be ensured that the surface of the photolacquer has the desired roughness due to the choice of photolacquer developer.

In another favourable embodiment, the substrate on the side of the recording layer comprises a coating layer comprising the surface discontinuities. In this case also it holds that the coating layer may not have a porous structure. A vapour deposition layer in the island stage can readily be used as a coating layer. An example hereof is a vapour-deposited layer of Au in the island stage.

Another suitable coating layer is a coarse granular vapour-deposited layer of dye. A typical example thereof is a layer of vapour-deposited vanadylphthalocyanine in which during the vapour deposition the temperature of the substrate to be coated is maintained at a minimum value of approximately 60—80°C. As a result, a coarse granular layer of vanadylphthalocyanine is obtained which can readily be used as a coating layer.

In a preferred form of the disc according to the invention the coating layer is a light-cured layer of lacquer of which the surface adjoining the recording layer is roughened or scratched mechanically or chemically or the surface of which adjoining the recording layer is a copy of the surface of a matrix comprising the surface discontinuity.

The light-cured lacquer layer is, for example, a layer of ultraviolet light-cured lacquer based on acrylic acid esters. It is to be preferred to provide the lacquer layer on the substrate by means of a matrix which has the desired surface discontinuity. For this purpose a liquid, light-curable lacquer layer is provided on the matrix surface having the discontinuity and the substrate plate is then placed on the lacquer layer. The lacquer layer is exposed to ultraviolet light via the substrate or via the matrix, after which the substrate and the cured lacquer layer connected thereto and in which the texture of the matrix surface is copied, is removed from the matrix. The lacquer layer is finally provided with an amorphous recording layer, for example a vapour-deposited layer of tellurium-germanium in a thickness of 30—40 nm. It is to be noted that upon exposing the lacquer via the substrate or via the matrix, the substrate and the matrix, respectively, should be transparent to the ultraviolet light used. To be preferred is a transparent substrate manufactured from glass or a transparent synthetic resin, for example, polymethylmethacrylate, polysulphon, polycarbonate or PVC.

In still another preferred embodiment, the cured lacquer layer on the side of the recording layer has an optically readable servo track which partly has a relief structure of servo areas situated alternately at a higher and a lower level.

The servo track generally is either a spiral or constructed from concentric circles, the servo areas situated alternately at a higher and a lower level giving the track of a crenelyated profile. The variations in the longitudinal dimensions of the servo areas, which show the form of blocks and pits, comprise the stored servo data and are roughly from 0.3 to 3 $\mu$m.

The difference in height between blocks and pits is roughly 0.1 $\mu$m.

The disk according to the invention having a servo track has the significant advantage that the recording of information in the recording layer is accurately controlled by the servo data present in the servo track which comprise, for example, orders with respect to the velocity of information recording and the location of recording. The laser light beam scanning the servo track via the transparent substrate transfers the servo data to a control mechanism which switches the laser light beam at a considerably higher energy content with which the desired information can be recorded in the recording layer.

The recording of information preferably takes place in those parts of the recording layer which are situated on the servo track between the servo data.

A recording disk in accordance with the invention comprising a servo track is manufactured by providing on the surface of a matrix comprising the servo track a layer of lacquer having a light-curable liquid lacquer, laying herein a substrate plate, curing the layer of lacquer, via the substrate plate or the matrix by means of light, taking the substrate plate and the cured lacquer layer connected thereto and in which the servo track is copied from the matrix surface and providing the cured lacquer layer with a recording layer.

It is recommendable to use a matrix which, in addition to the servo track, also has the desired surface discontinuity. However, this is not necessary because the cured lacquer layer having a servo track can be roughened mechanically or chemically before providing the recording layer or can be scratched or be given a coating layer comprising the surface discontinuity, for example, a vapour-deposited layer of Au in the insula stage or a coarse granular layer of vanadylphthalocyanine. The last-mentioned method, however, requires an extra process step.

A matrix with servo track can be manufactured by providing in the photolacquer of the master plate a servo track by exposure and development, which track is then copied in the grown metal peel, after which successively further electroformed copies, for example, intermediate copy plates and matrices are manufactured. The desired surface discontinuities can be provided already in the surface of the photolacquer layer and then be copied in the various metal copies. The matrix comprising a servo track can also be roughened chemically or mechanically in an after treatment, be provided with scratches or coated with a coating layer comprising the discontinuity, for example, a vapour-deposited layer of Au in the insula stage or a coarse granular layer of vanadylphthalocyanine in a thickness, for example, of 30 nm.

The amorphous recording layer used in the recording disc according to the invention, for example, is a layer of a chalcogenide glass which can be provided by a vapour deposition or sputtering process and has a thickness of approximately 30—40 nm. A very suitable recording layer is an amorphous layer of a mixture of tellurium with one or several elements selected from the group As, Sb, Bi, Ge, Sn, Si, Ga, In, Tl, Se and S.

The substrate used in the recording disc according to the invention preferably is transparent and is manufactured from glass or from the above-mentioned transparent synthetic resin. In such a disc, information can be recorded or read *via* the substrate by means of laser light so that the contaminations such as dust particles, present on the surface of the disc fall beyond the depth of focus of the objective which focuses the laser light on the recording layer.

The invention will be described in greater detail with reference to the drawings, in which

Fig. 1 is a cross-sectional view of a recording disc according to the invention,

Fig. 2 is a cross-sectional view of another embodiment of the information disc,

Fig. 3 is a cross-sectional view of still another favourable embodiment of the information disc,

Fig. 4 is a photograph of a part of the surface of the information disc shown in Fig. 3 having information,

Fig. 5 is an enlargement of the photograph shown in Fig. 4, and

Fig. 6 is a cross-sectional view of a further embodiment of the information disc according to the invention.

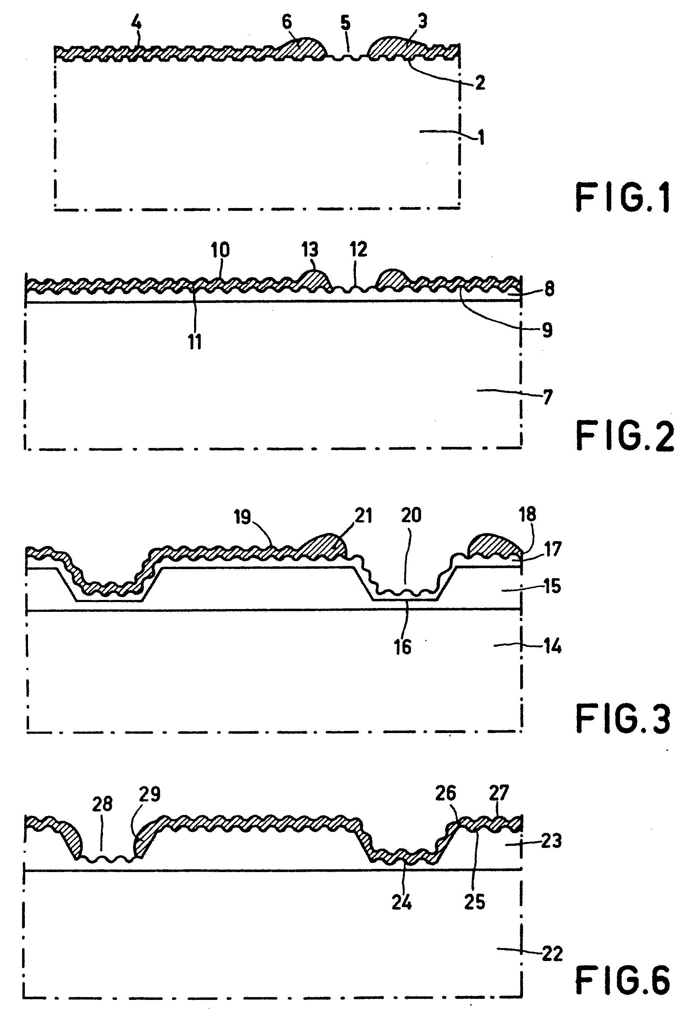

Reference numeral 1 in Fig. 1 denotes a 1 $\mu$m thick substrate plate of polymethylmethacrylate roughened mechanically on one side. The resulting profile of scratches is shown diagrammatically in the Figure and is referenced 2. The scratches have a width of approximately 50 nm and a depth of 20 nm. The surface provided with such a surface discontinuity comprises a vapour-deposited recording layer 3 of $Te_1Se_1Sb_1$ in a thickness of 30 nm. The surface of recording layer 3 remote from the substrate plate shows a profile 4 of scratches which corresponds to the profile 2 of scratches.

Upon recording information, the optical recording disc shown in Fig. 1 is exposed, *via* substrate plate 1, to pulsated laser light originating from a laser having a power of 2.3 mW on the recording layer, an emission wavelength of 800 nm and a pulse time of 500 ns. As a result of the exposure for 500 ns, a hole 5 is formed in the recording layer 3. The resulting hole has a diameter of 0.2 $\mu$m and comprises a ridge portion 6 which contains recording material which in a liquid form originates from the hole and has then solidified to form the ridge portion 6.

Reference numeral 7 in Fig. 2 denotes a plate of polymethylmethacrylate having a thickness of 1 mm which comprises on one side a vapour-deposited layer 8 of vanadylphthalocyanide of which the surface remote from the plate 7 shows a coarse-granular structure 9. A structure detail of the coarse-granular surface has diametrical dimensions of approximately 70—100 nm. The coarse-granular layer is made by vapour-depositing vanadylphthalocyanide at normal temperature (room temperature) and then keeping the vapour deposited layer at a temperature of 80°C for several hours. It is also possible during the vapour deposition of vanadylphthalocyanide, to keep the plate at a temperature of 80°C. The vapour-deposited coating layer 8 has a thickness of 26.5 nm and supports a vapour-deposited recording layer 10 of $Te_1Se_1Sb_1$ of thickness 30 nm. The recording layer also has a coarse granular structure 11 which corresponds to that of layer 8.

Upon recording information, the recording layer 10 is exposed to pulsated laser light originating from a laser having a power of 3 mW on the recording layer, an emission wavelength of 647 nm and a pulse time of 1 $\mu$s. As a result of the exposure for 1 $\mu$s, a hole 12 is formed in the recording layer which is surrounded by a ridge portion 13 of recording material originating from the hole. The hole 12 has diametrical dimensions of 0.75 $\mu$m. In the absence of coating layer 8 in which the recording layer of $Te_1Se_1Sb_1$ provided directly on the plate 7 does not show a coarse-granular surface structure, the minimum hole dimension is at least 1.3 $\mu$m.

Reference numeral 14 in Fig. 3 denotes a 1 mm thick substrate plate of polymethylmethacrylate which is provided on one side with an ultra-violet-light-cured lacquer layer 15 in which a servotrack 16 is provided. Lacquer layer 15 is provided by providing a matrix surface comprising the servo track with a layer of liquid light-curable lacquer based on acrylic acid esters, laying the substrate plate on the liquid lacquer, then curing the lacquer layer with ultra-violet light *via* the substrate and finally removing the assembly of substrate plate and cured lacquer layer connected thereto in which the servo track has been copied, from the matrix surface. The servo track has a width of approximately 0.6 $\mu$m and a depth of 0.2 $\mu$m. Lacquer layer 15 has a coarse-granular layer of vanadylphthalocyanine 17 of thickness 66 nm obtained by vapour-depositing vanadylphthalocyanine at room temperature and then keeping the resulting layer at 80°C for 10 hours. Layer 17 in turn comprises a recording layer 18 of $Ge_{15}Te_{85}$ in a thickness of 30 nm. The surface of layer 18 shows a structure 19 which corresponds to that of layer 17.

Upon recording information, the recording layer 18 at the area of the servo track 16 is exposed *via* the substrate 14 to pulsated laser light originating from a laser having a power of 2 mW on the recording layer, an emission wavelength of 800 nm and a pulse time of 500 ns. As a result of the exposure for 500 ns a hole 20 is formed in the recording layer 18 having a diameter of 1.0 μm and surrounded by a ridge portion 21 of recording material originating from the hole 20. If no coarse-granular coating layer 17 of vanadylphthalocyanine is used and the recording layer 18 consequently does not show a coarse-granular surface texture, a hole is formed in the recording layer only with a laser light power of 4.6 mW and a pulse time of 500 ns, which hole then has a diameter of 1.5 μm.

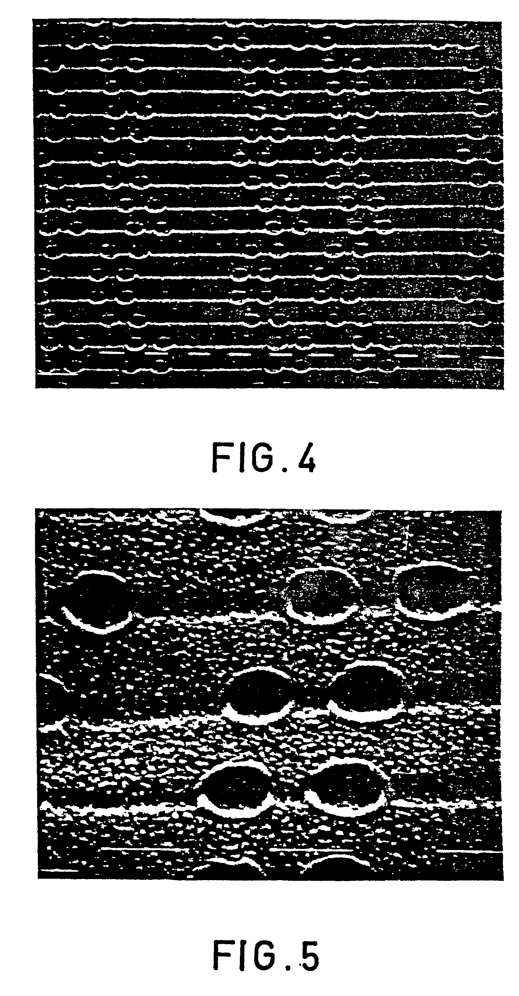

Fig. 4 is a photograph of a part of the surface of the recording layer shown in Fig. 3. The various servo tracks and the holes (information bits) provided in the recording layer at the area of the servo tracks and having a ridge portion are very clearly visible. The coarse-granular surface texture of the recording layer can also be readily observed. The broken line present in the lower part of the photograph shows the picture scale, each part of the line shown having a length of 1 μm.

Fig. 5 is a further enlargement of Fig. 4 in which notably the coarse-granularity of the recording layer is clearly observable.

Reference numeral 22 in Fig. 6 denotes a 1 mm thick substrate plate of polymethylmethacrylate which is provided on one side with an ultraviolet-light-cured lacquer layer 23 having a servo track 24 and a coarse granular (roughened) surface 25. Lacquer layer 23 with servo track 24 and rough surface 25 has been obtained by providing on a coarse-granular matrix surface comprising the servo track a light-curable lacquer based on, for example, acrylic acid esters, laying hereon the substrate plate, then curing the lacquer layer *via* the substrate with ultraviolet light and removing from the matrix the resulting assembly of substrate plate and cured lacquer layer connected thereto in which the servo track and the surface texture of the matrix have been copied. A matrix with servo track and coarse-granular surface can be manufactured, for example, by vapour-depositing at a temperature of 80°C a layer of vanadylphthalocyanine on a nickel matrix having a smooth surface and comprising the servo track.

Lacquer layer 23 has a vapour-deposited recording layer 26 of $In_{50}Bi_{50}$ in a layer thickness of 30 nm. Recording layer 26 has a surface texture 27 which corresponds to that of layer 23.

Upon recording information, recording layer 26 is exposed *via* substrate 22 to pulsated laser light originating from a laser having a power of 2.5 mW on the recording layer, an emission wavelength of 676 nm, and a pulse time of 100 ns. As a result of the exposure for 100 ns, a hole 28 is formed in the recording layer 26 having a diameter of 0.2 μm and comprising a ridge portion 29. When using a laser light power of 8.5 mW and a pulse time of 100 ns, a hole is obtained having a diameter of 0.75 μm so that analog recording of information is possible.

## Claims

1. An optical recording disk in which information can be recorded and read optically, comprising a disk-shaped substrate (1, 7, 14, 22) which has an amorphous recording layer (3, 10, 18, 26) on at least one side which upon exposure to energy-rich light modulated according to the information melts in the exposed places and forms holes (5, 12, 20, 28), characterized in that the substrate surface situated on the side of the recording layer, at least in those places where upon exposure holes are to be formed in the overlying recording layer, comprises surface discontinuities (2, 9, 25) which have diametrical dimensions of 30 to 300 nm or in case the surface continuities consist of scratches have width dimensions of 30—300 nm and a level difference with the substrate surface from 8 to 80 nm, the recording layer having a maximum thickness of approximately 50 nm.

2. An optical recording disc as claimed in Claim 1, characterized in that the substrate (1) is a substrate manufactured from a synthetic resin or glass whose surface adjoining the recording layer has been chemically or mechanically roughened or provided with scratches (2) or whose surface adjoining the recording layer is a copy of the surface of a matrix comprising the surface discontinuities.

3. An optical recording disc as claimed in Claim 1, characterized in that on the side of the recording layer (10, 18, 26) the substrate (7, 14, 22) has a coating layer (8, 17, 23) comprising the surface discontinuities.

4. An optical recording disc as claimed in Claim 3, characterized in that the coating layer (8, 17) is an inhomogeneous or coarse granular vapour-deposited layer.

5. An optical recording disc as claimed in Claim 3, characterized in that the coating layer (23) is a light-cured lacquer layer of which the surface adjoining the recording layer (26) has been mechanically or chemically roughened or provided with scratches or of which the surface adjoining the recording layer (26) is a copy of the surface of a matrix comprising the surface discontinuities (25).

6. An optical recording disc as claimed in Claim 5, characterized in that the light-cured lacquer layer (23) comprises an optically readable servo track (24) which partly has a relief structure of servo areas situated alternately at a higher and a lower level.

## Revendications

1. Disque d'enregistrement optique dans lequel de l'information peut être enregistrée et lue par voie optique, comportant un substrat en forme de disque (1, 7, 14, 22), qui présente une couche d'enregistrement amorphe (3, 10, 18, 26) qui, dans le cas d'exposition à de la lumière riche en énergie modulée conformément à

l'information, fond aux endroits exposés et forme des trous (5, 12, 20, 28), caractérisé en ce que la surface de substrat située du côté de la couche d'enregistrement, au moins aux endroits où, après exposition, des trous sont formés dans la couche d'enregistrement supérieure, comporte des discontinuités superficielles (2, 9, 25), qui présentent des dimensions diamétrales de 30 à 300 nm, ou dans le cas où les discontinuités superficielles sont constituées par des rayures présentent des dimensions de largeur de 30 à 300 nm et une différence de niveau par rapport à la surface de substrat de 8 à 80 nm, la couche d'enregistrement présentant une épaisseur maximale d'environ 50 nm.

2. Disque d'enregistrement optique selon la revendication 1, caractérisé en ce que le substrat (1) est un substrat réalisé à partir d'une résine synthétique ou de verre, dont la surface confinant à la couche d'enregistrement a été rendue rugueuse par voie chimique ou mécanique ou munie de rayures (2) ou dont la surface confinant à la couche d'enregistrement est une copie de la surface d'une matrice présentant les discontinuités superficielles.

3. Disque d'enregistrement optique selon la revendication 1, caractérisé en ce que du côté de la couche d'enregistrement (10, 18, 26), le substrat (7, 14, 22) présente une couche de recouvrement (8, 17, 23) présentant les discontinuités superficielles.

4. Disque d'enregistrement optique selon la revendication 3, caractérisé en ce que la couche de recouvrement (8, 17) est une couche non homogène ou à gros grains appliquée par évaporation.

5. Disque d'enregistrement optique selon la revendication 3, caractérisé en ce que la couche de recouvrement (23) est une couche en vernis durcie par de la lumière dont la surface confinant à la couche d'enregistrement (26) a été rendue rugueuse par voie mécanique ou chimique ou munie de rayures ou dont la surface confinant à la couche d'enregistrement (26) est une copie de la surface d'une matrice présentant les discontinuités superficielles (25).

6. Disque d'enregistrement optique selon la revendication 5, caractérisé en ce que la couche de vernis durcie par de la lumière (23) comporte une servopiste lisible par voie optique (24) qui présente en partie une structure en relief ou des servozones situées alternativement à un niveau plus élevé et plus bas.

**Patentansprüche**

1. Optische Aufzeichnungsplatte, in der auf optischem Weg Information eingeschrieben bzw. ausgelesen werden kann, die ein plattenförmiges Substrat (1, 7, 14, 22) enthält, das an mindestens einer Seite mit einer amorphen Aufzeichnungsschicht (3, 10, 18, 26) versehen ist, die bei Belichtung mit entsprechend der Information moduliertem energiereichen Licht an den belichteten Stellen schmilzt und Löcher (5, 12, 20, 28) bildet, dadurch gekennzeichnet, dass die auf der Seite der Aufzeichnungsschicht liegende Substratoberfläche mindestens an denjenigen Stellen, wo bei Belichtung in der obenliegenden Aufzeichnungsschicht Löcher gebildet werden, mit Oberflächendiskontinuitäten (2, 9, 25) versehen ist, die diametrale Abmessungen von 30 bis 300 nm und einen Pegelunterschied gegenüber der Substratoberfläche von 8 bis 80 nm aufweisen, wobei die Aufzeichnungsschicht eine maximale Dicke von etwa 50 nm hat.

2. Optische Aufzeichnungsplatte nach Anspruch 1, dadurch gekennzeichnet, dass das Substrat (1) ein aus Kunststoff oder Glas hergestelltes Substrat ist, dessen an die Aufzeichnungsschicht grenzende Oberfläche auf chemischem oder mechanischem Weg aufgerauht bzw. mit Kratzern (2) versehen ist, deren an die Aufzeichnungsschicht grenzende Oberfläche eine Kopie der Oberfläche einer Matrize ist, die die Oberflächendiskontinuitäten aufweist.

3. Optische Aufzeichnungsplatte nach Anspruch 1 oder 2, dadurch gekennzeichnet, dass das Substrat (7, 14, 22) auf der Seite der Aufzeichnungsschicht (10, 18, 26) mit einer Deckschicht (8, 17, 23) versehen ist, die die Oberflächendiskontinuitäten aufweist.

4. Optische Aufzeichnungsplatte nach Anspruch 3, dadurch gekennzeichnet, dass die Deckschicht (8, 17) eine inhomogene oder grobkörnig aufgedampfte Schicht ist.

5. Optische Aufzeichnungsplatte nach Anspruch 3, dadurch gekennzeichnet, dass die Deckschicht (23) eine lichtgehärtete Lackschicht ist, deren an die Aufzeichnungsschicht (26) grenzende Oberfläche auf mechanischem oder chemischem Weg aufgerauht oder mit Kratzern versehen ist oder deren an die Aufzeichnungsschicht (26) grenzende Oberfläche eine Kopie der Oberfläche einer Matrize ist, die die Oberflächendiskontinuitäten (25) aufweist.

6. Optische Aufzeichnungsplatte nach Anspruch 5, dadurch gekennzeichnet, dass die lichtgehärtete Lackschicht (23) eine optisch auslesebare Servospur (24) enthält, die teilweise eine Reliefstruktur aus abwechselnd auf höherem und niedrigerem Pegel liegenden Servogebieten hat.

FIG.1

FIG.2

FIG.3

FIG.6

FIG.4

FIG.5